# EUROPEAN PATENT APPLICATION

(11) **EP 3 470 685 A1**
(43) Date of publication of application: **17.04.2019**
(21) Application number: 18200112.3
(22) Date of filing: 12.10.2018
(51) Int. Cl.: F04D 29/32, F01D 5/30, F01D 11/00

(54) **GAP CLOSING WEARLINER**

(30) Priority: 16.10.2017 US 201715785059
(71) Applicant: United Technologies Corporation, Farmington, CT 06032 (US)
(72) Inventor: YIP, Justin, Dover, NH New Hampshire 03820 (US); FREEMAN, Thomas, Kennebunk, ME Maine 04043 (US); AMADON, Colin G., Kennebunk, ME Maine 04043 (US)
(74) Representative: Dehns

(57) **Abstract**

A gap closing wearliner (400; 500; 600) may comprise a first liner portion (402; 502; 602) disposed within a groove (316, 318) of a compressor vane case (200; 300), the first liner portion (402; 502; 602) having first surface (408; 508; 608) parallel to an inner face (324) of the groove (316, 318) and a second surface (410; 510; 610) parallel a lower face (320) of the groove (316, 318), the first liner portion (402; 502; 602) formed to a contour of the groove (316, 318) and configured to receive a tongue (308, 310) of a pedestal (304) having a vane (202), a gap (412) between the first surface (408; 508; 608) of the first liner portion (402; 502; 602) (402; 502; 602) and the tongue, and a high Coefficient of Thermal Expansion (CTE) material (406; 506; 606). The gap closing wearliner (400; 500; 600) may further comprise a second liner portion disposed within the groove (316, 318) of the compressor vane case (200; 300), formed to the contour of the groove (316, 318), and configured to receive the tongue (308, 310) of the pedestal (304).

## Description

### FIELD

The disclosure relates generally to compressor stators in gas turbine engines.

### BACKGROUND

Gas turbine engines typically include a fan section to drive inflowing air, a compressor section to pressurize inflowing air, a combustor section to burn a fuel in the presence of the pressurized air, and a turbine section to extract energy from the resulting combustion gases. The fan section may include a plurality of fan blades coupled to a fan hub. The compressor section and the turbine section typically include a series of alternating rotors (blades) and stators. Gas turbine engine compressor stator vanes tend to twist relative to each other within the stator vane case during engine operation. Twisting tends to reduce gas turbine engine efficiency and compressor stator vane operational life.

### SUMMARY

In various embodiments the present disclosure provides a gap closing wearliner may comprise a first liner portion disposed within a groove of a compressor vane case, the first liner portion having first surface parallel to an inner face of the groove and a second surface parallel a lower face of the groove, the first liner portion formed to a contour of the groove and configured to receive a tongue of a pedestal having a vane, a gap between the first surface of the first liner portion and the tongue, and a high Coefficient of Thermal Expansion (CTE) material. The gap closing wearliner may further comprise a second liner portion disposed within the groove of the compressor vane case, formed to the contour of the groove, and configured to receive the tongue of the pedestal. In various embodiments, the high CTE material may be disposed between the first liner portion and the second liner portion.

In various embodiments, the high CTE material is disposed behind the first surface of the first liner portion. In various embodiments, the first surface is driven across the gap in response to a change in temperature. In various embodiments, the first surface contacts the tongue in response to the change in temperature. In various embodiments, an interference between the first surface and the tongue limits a change in an angle of attack of the vane at a maximum. In various embodiments, the high CTE material is disposed behind the second surface of the first liner portion. In various embodiments, the first liner portion further comprises a third surface extending over a portion of an upper face of the tongue, wherein the high CTE material is disposed behind the third surface. In various embodiments, the first liner portion comprises at least one of one metal, metal alloy, titanium, titanium alloy, nickel, nickel alloy, plastic, ceramic, or composite. In various embodiments, a portion of the first liner portion is surface treated. In various embodiments, the high CTE material comprises at least one of rubber, silicone rubber, a Room-Temperature-Vulcanization silicone compound, plastic, or polytetrafluoroethylene. In various embodiments, the high CTE material has a CTE between 10-5(1/F°) and 10-3(1/F°).

In various embodiments the present disclosure provides a gas turbine engine may comprise a compressor section configured to compress a gas, a combustor section aft of the compressor section and configured to combust the gas, a turbine section aft of the combustor section configured to extract energy from the gas, and a first gap closing wearliner wherein the first gap closing wearliner comprises a first liner portion disposed within a groove of a compressor vane case, the first liner portion having first surface parallel to an inner face of the groove and a second surface parallel a lower face of the groove, the first liner portion formed to a contour of the groove and configured to receive a tongue of a pedestal having a vane, a gap between the first surface of the first liner portion and the tongue, and a high Coefficient of Thermal Expansion (CTE) material.

In various embodiments, the first gap closing wearliner further comprises a second liner portion disposed within the groove of the compressor vane case, formed to the contour of the groove, and configured to receive the tongue of the pedestal. In various embodiments, the high CTE material is disposed between the first liner portion and the second liner portion. In various embodiments, the first surface is driven across the gap in response to a change in temperature. In various embodiments, an interference between the first surface and the tongue limits a change in an angle of attack of the vane at a maximum. In various embodiments, the gas turbine engine may further comprise a second gap closing wearliner.

In various embodiments, the present disclosure provides a method of manufacturing a gap closing wearliner. The method may comprise forming a first liner portion and a second liner portion to a contour of a tongue of a vane pedestal and a contour of a groove of a compressor vane case, coupling a high CTE material between the first liner portion and the second liner portion, and inserting the first liner portion and the second liner portion into the groove of the compressor vane case.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates an exemplary gas turbine engine, in accordance with various embodiments;
FIG. 2A illustrates a compressor vane case, in accordance with various embodiments;
FIG. 2B illustrates a compressor vane case, in accordance with various embodiments;
FIG. 3 illustrates a compressor vane having a gap closing wearliner, in accordance with various embodiments;
FIG. 4A illustrates a gap closing wearliner, in accordance with various embodiments;
FIG. 4B illustrates a gap closing wearliner in the expanded condition, in accordance with various embodiments;
FIG. 5 illustrates a gap closing wearliner in the expanded condition, in accordance with various embodiments;
FIG. 6 illustrates a gap closing wearliner in the expanded condition, in accordance with various embodiments; and
FIG. 7 illustrates a method of manufacturing a gap closing wearliner, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosures, it should be understood that other embodiments may be realized and that logical, chemical, and mechanical changes may be made without departing from the scope of the disclosures. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

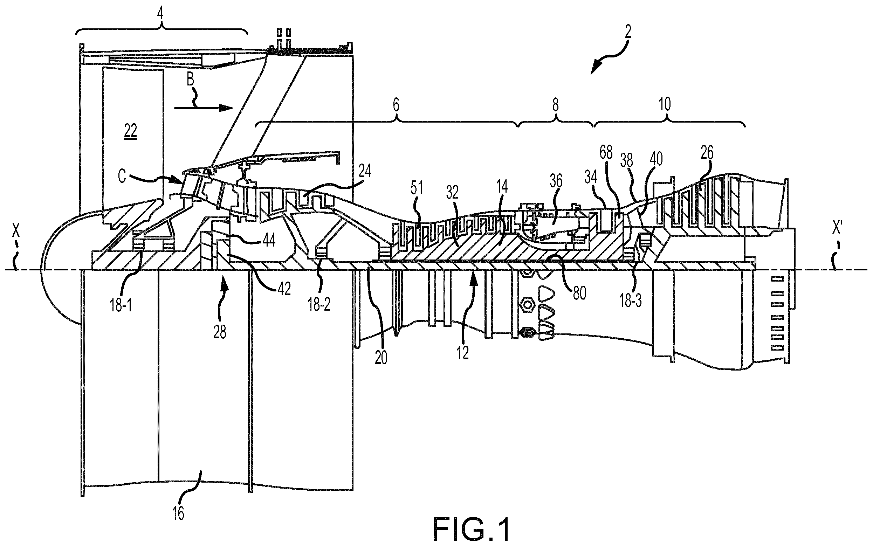

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmenter section among other systems or features. In operation, fan section 22 can drive air along a bypass flow-path B while compressor section 24 can drive air for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

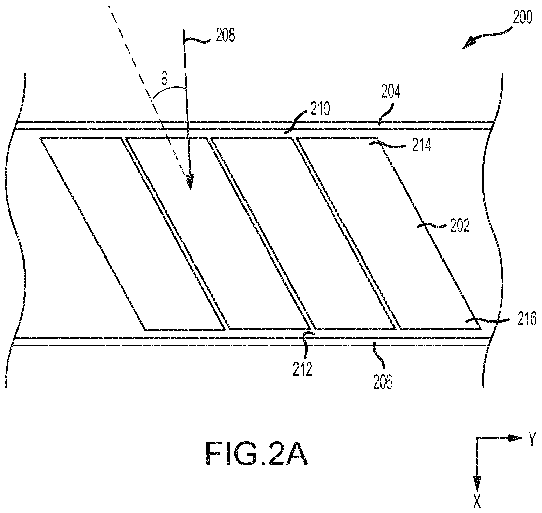

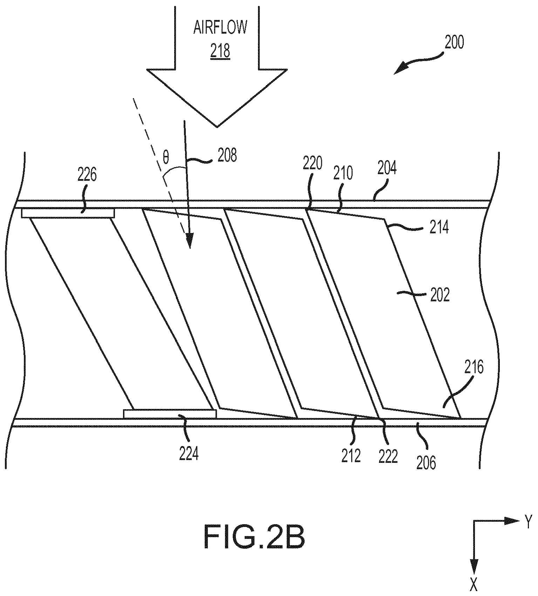

Gas turbine engine 20 may generally comprise a low speed spool 30 and a high speed spool 32 mounted for rotation about an engine central longitudinal axis A-A' relative to an engine static structure 36 via one or more bearing systems 38 (shown as bearing system 38-1 and bearing system 38-2 in FIG. 2). It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 (also referred to a low pressure compressor) and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor ("HPC") 52 (e.g., a second compressor section) and high pressure (or second) turbine section 54. A combustor 56 may be located between HPC 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then HPC 52, mixed and burned with fuel in combustor 56, then expanded over high pressure turbine 54 and low pressure turbine 46. Mid-turbine frame 57 includes airfoils 59 which are in the core airflow path. Low pressure turbine 46, and high pressure turbine 54 rotationally drive the respective low speed spool 30 and high speed spool 32 in response to the expansion.

Gas turbine engine 20 may be, for example, a high-bypass geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about 5. In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans.

In various embodiments, the next generation of turbofan engines may be designed for higher efficiency which is associated with higher pressure ratios and higher temperatures in the HPC 52. These higher operating temperatures and pressure ratios may create operating environments that may cause thermal loads that are higher than the thermal loads encountered in conventional turbofan engines, which may shorten the operational life of current components.

In various embodiments, HPC 52 may comprise alternating rows of rotating rotors and stationary stators. Stators may have a cantilevered configuration or a shrouded configuration. More specifically, a stator may comprise a stator vane, a casing support and a hub support. In this regard, a stator vane may be supported along an outer diameter by a casing support and along an inner diameter by a hub support. In contrast, a cantilevered stator may comprise a stator vane that is only retained and/or supported at the casing (e.g., along an outer diameter).

In various embodiments, rotors may be configured to compress and spin a fluid flow. Stators may be configured to receive and straighten the fluid flow. In operation, the fluid flow discharged from the trailing edge of stators may be straightened (e.g., the flow may be directed in a substantially parallel path to the centerline of the engine and/or HPC) to increase and/or improve the efficiency of the engine and, more specifically, to achieve enhanced compression and/or efficiency when the straightened air is compressed and spun by rotor 64.

According to various embodiments and with reference to FIGS. 1 and 2A, a compressor vane case 200 of a compressor, such as low pressure compressor 44 or HPC 52, is illustrated as a section in plane with the base of vanes 202. Vanes 202 tend to be retained by forward wall 204 and aft wall 206 of compressor vane case 200 at an angle of attack θ with respect the chord of the vanes 202 and velocity vector 208 of airflow through the compressor. Assembly of vanes 202 into compressor vane case 200 tends to produce forward gap 210 between forward wall 204 and leading edge 214 of vanes 202 and aft gap 212 between aft wall 206 and trailing edge 216 of vanes 202. In various embodiments and with additional reference to FIG. 2B, in response to airflow 218, the vanes 202 tend to twist tending to decrease angle of attack θ. Twisting vanes 202 tends to open forward gap 210 and aft gap 212 by disposing a corner portion 220 of leading edge 214 proximate forward wall 204 and a corner portion 222 of trailing edge 216 proximate aft wall 206. In other words, twisting vanes 202 tends to decrease the effective circumferential length (along the Y-axis) of vanes 202 tending to increase gapping and increase secondary flow leakage thereby tending to decrease efficiency. In various embodiments, vanes 202 may contact each other in response to opening forward gap 210 and opening aft gap 212 tending to further decrease efficiency. Contact between corner portion 220 and forward wall 204 and between corner portion 222 and aft wall 206 tends to allow a change in angle of attack θ to exceed a maximum allowable change in angle of attack θ. In various embodiments, a first gap closing wear liner 224 and a second gap closing wear liner 226 tends to limit the change in angle of attack θ in response to airflow 218 to a maximum.

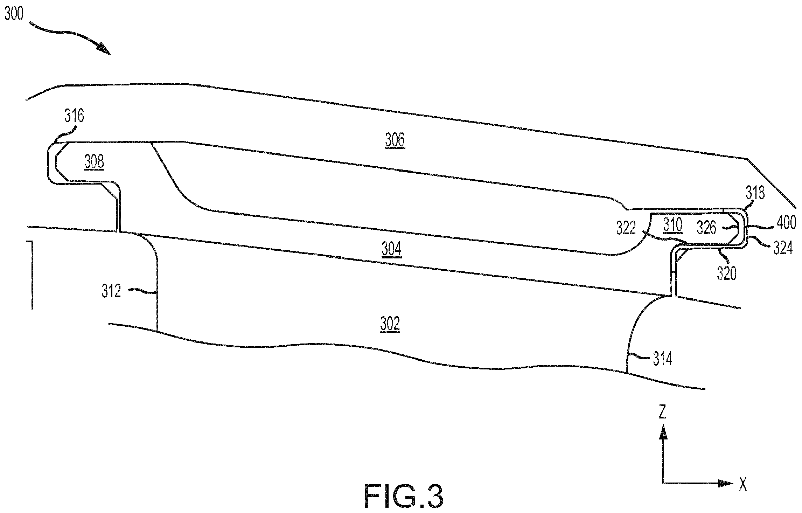

With reference now to FIG. 3, in various embodiments a compressor vane case 300 having a gap closing wear liner is provided. Vane 302 extends from pedestal 304 radially (along the z-axis) inward of case 306. Pedestal 304 has forward tongue 308 proximate leading edge 312 and aft tongue 310 proximate trialing edge 314 of vane 302. Forward tongue 308 is disposed within forward groove 316 of case 306 and aft tongue 310 is disposed within aft groove 318 of case 306 tending to restrain vane 302 from translating along the z-axis or x-axis. A gap closing wearliner 400 is disposed within aft groove 318 between lower face 320 of aft groove 318 and lower face 322 of aft tongue and between inner face 324 of aft groove 318 and trailing edge face 326 of aft tongue 310.

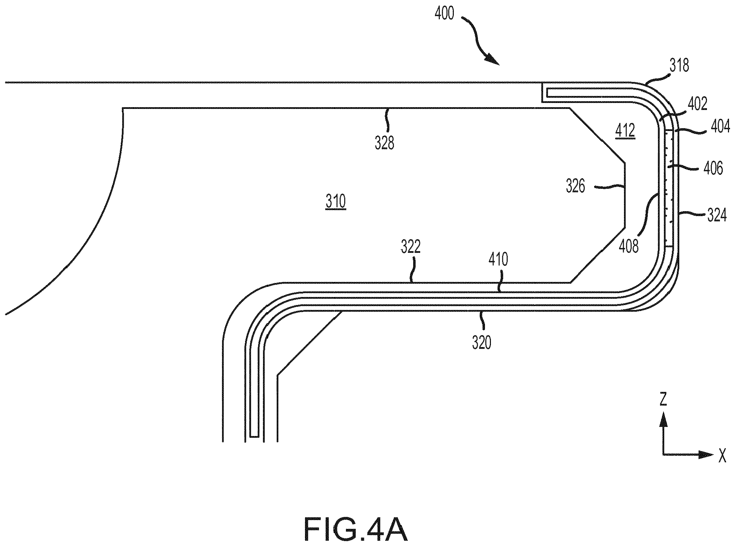

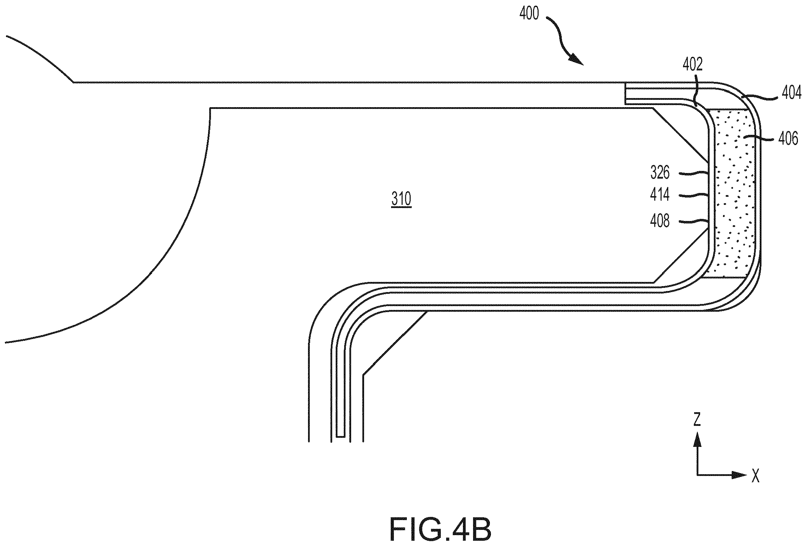

In various embodiments, and with reference now to FIG. 4A, a gap closing wearliner is provided. Gap closing wearliner 400 comprises a first liner portion 402 and a second liner portion 404 formed to the contours of aft groove 318 and configured to receive aft tongue 310. First liner portion 402 has a first surface 408 parallel to inner face 324 of aft groove 318 and proximate trailing edge face 326 of aft tongue 310. First liner portion 402 has a second surface 410 parallel to lower face 320 of aft groove 318 and proximate lower face 322 of aft tongue 310. First surface 408 is separated from trailing edge face 326 by an axial gap 412. A high coefficient of thermal expansion (CTE) material 406 is disposed between first liner portion 402 and second liner portion 404 behind first surface 408. In various embodiments and with additional reference to FIGS. 2B and 4B, in response to a change in temperature, high CTE material 406 tends to expand tending thereby to close axial gap 412 by forcing first liner portion 402 away (along the x-axis) from second liner portion 404 and driving first surface 408 across axial gap 412 toward trailing edge face 326 of aft tongue 310. In various embodiments, in response to a change in temperature and expansion of high CTE material 406, first surface 408 tends to contact trailing edge face 326 tending to produce an interference 414, along trailing edge face 326, between the aft tongue 310 and the first surface 408 which tends to limit the change in angle of attack θ in response to airflow 218 to a maximum.

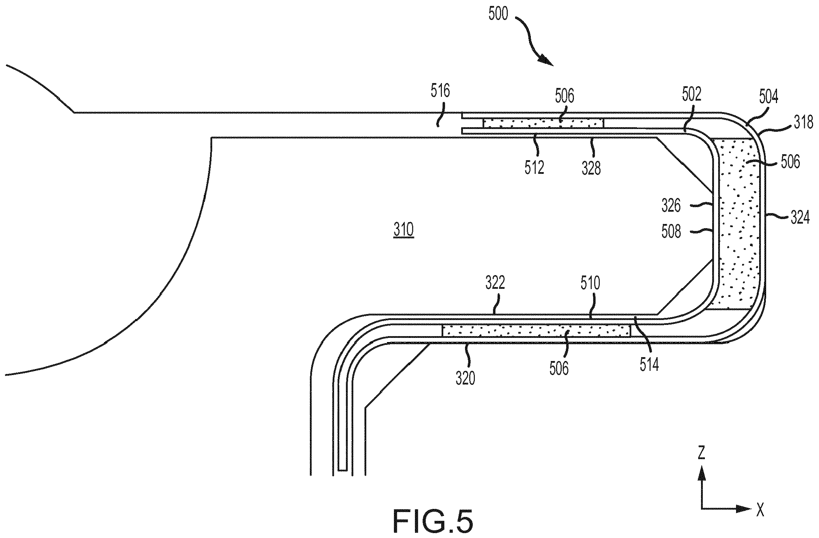

In various embodiments and with reference now to FIG. 5, a gap closing wearliner 500 comprising features, geometries, construction, manufacturing techniques, and/or internal components similar to gap closing wearliner 400 is provided according to various embodiments. Gap closing wearliner 500 is shown in the expanded condition and comprises a first liner portion 502 and a second liner portion 504 formed to the contours of aft groove 318 and configured to receive aft tongue 310. First liner portion 502 has a first surface 508 parallel to inner face 324 of aft groove 318 and high CTE material 506 disposed behind (i.e. in the positive x direction or on a surface opposite first surface 508) first surface 508 between first liner portion 502 and second liner portion 504. High CTE material 506 has expanded along the x-axis to bring first surface 508 into contact with trailing edge face 326 of aft tongue 310. First liner portion 502 has a second surface 510 parallel to lower face 320 of aft groove 318 and high CTE material 506 disposed below (relative to the z-axis) second surface 510 between first liner portion 502 and second liner portion 504. High CTE material 506 has expanded along the z-axis tending to close gap 514 and bring second surface 510 to contact lower face 322 of aft tongue 310. First liner portion 502 has a third surface 512 extending over a portion of upper face 328 of aft tongue 310. High CTE material 506 is disposed above (relative to the z-axis) third surface 512 has expanded along the z-axis tending to close gap 514 and bring third surface 512 into contact with upper face 328.

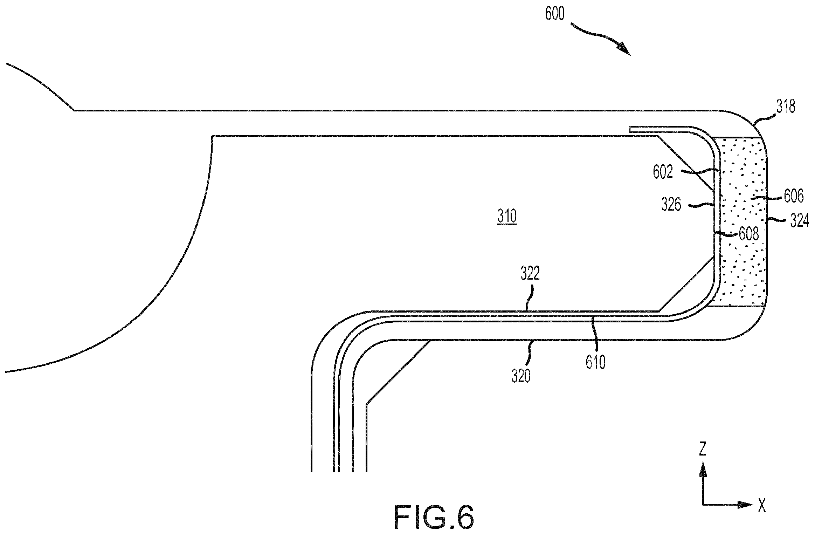

In various embodiments and with reference now to FIG. 6, a gap closing wearliner 600 comprising features, geometries, construction, manufacturing techniques, and/or internal components similar to gap closing wearliner 400 is provided according to various embodiments and shown in the expanded condition. Gap closing wearliner 600 comprises a liner portion 602 formed to the contours of aft groove 318 and configured to receive aft tongue 310. Liner portion 602 has a first surface 608 parallel to inner face 324 of aft groove 318 and proximate trailing edge face 326 of aft tongue 310. Liner portion 602 has a second surface 610 parallel to lower face 320 of aft groove 318 and proximate lower face 322 of aft tongue 310. A high coefficient of thermal expansion (CTE) material 606 is coupled to liner portion 602 behind (along the x-axis) first surface 608.

In various embodiments, a liner portion, such as, for example, liner portion 602, first liner portion 402 or second liner portion 404, is comprised of a metal, a metal alloy, a titanium, a titanium alloy, a nickel, a nickel alloy, a plastic, a ceramic, or a composite. In various embodiments, the CTE of a high CTE material may be between 10-6(1/F°) and 10-3(1/F°), or may be between 10-5(1/F°) and 10-3(1/F°), or may be between, 10-4(1/F°) and 10-3(1/F°). In various embodiments, a high CTE material may have a CTE one or two orders of magnitude greater than many metals. In various embodiments the gap, such as axial gap 412, is between 0.0003 inches and 0.09 inches, or between 0.003 inches and 0.05 inches, or between 0.01 inches and 0.03 inches. In various embodiments, a high CTE material may comprise one of a rubber, a synthetic rubber, a silicone rubber, a Room-Temperature-Vulcanization silicone compound, a plastic, or a polytetrafluoroethylene such as, for example, that sold commercially as Teflon®. In various embodiments, the high CTE material may be bonded to the liner portion by an adhesive such as, for example, a two part adhesive. In various embodiments, the liner portion may have a disrupted surface to promote bonding of the high CTE material. In various embodiments, a disrupted surface is one that is etched, sand blasted, or otherwise rough. In various embodiments, a gap closing wear liner such as, for example, gap closing wearliner 400, may be disposed in a forward groove, such as forward groove 316, and configured to receive a forward tongue such as forward tongue 308. In various embodiments, a vane case, such as compressor vane case 300, may comprise more than one gap closing wear liner.

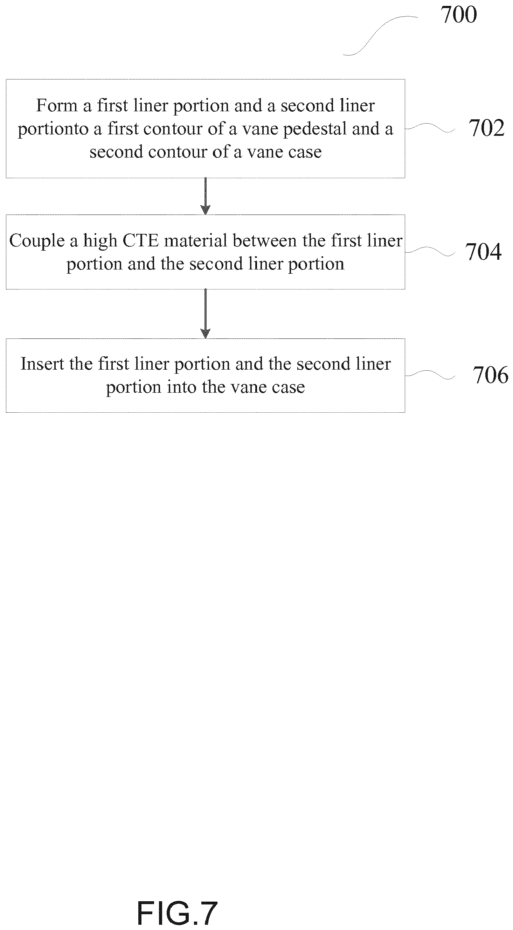

In various embodiments and with reference now to FIG. 7, a method 700 of fabricating a gap closing wearliner may comprise providing a first liner portion and a second liner portion and forming the first liner portion and the second liner portion 702 to a first contour of a tongue of a vane pedestal and a second contour of a groove of a compressor vane case; coupling a high CTE material between the first liner portion and the second liner portion 704; and inserting the first liner portion and the second liner portion into the groove 706 of the compressor vane case.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiment

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A gap closing wearliner (400; 500; 600), comprising:
a first liner portion (402; 502; 602) disposed within a groove (316, 318) of a compressor vane case (200; 300);
the first liner portion (402; 502; 602) having a first surface (408; 508; 608) parallel to an inner face (324) of the groove (316, 318) and a second surface (410; 510; 610) parallel to a lower face (320) of the groove (316, 318);
the first liner portion (402; 502; 602) formed to a contour of the groove (316, 318) and configured to receive a tongue (308, 310) of a pedestal (304) having a vane (202);
a gap (412) between the first surface (408; 508; 608) of the first liner portion (402; 502; 602) and the tongue (308, 310); and
a high Coefficient of Thermal Expansion (CTE) material (406; 506; 606).

2. The gap closing wearliner (400; 500; 600) of claim 1, further comprising a second liner portion (404; 504; 604) disposed within the groove (316, 318) of the compressor vane case (200; 300), formed to the contour of the groove (316, 318), and configured to receive the tongue (308, 310) of the pedestal (304).

3. The gap closing wearliner (400; 500; 600) of claim 2, wherein the high CTE material (406; 506; 606) is disposed between the first liner portion (402; 502; 602) and the second liner portion (404; 504; 604).

4. The gap closing wearliner (400; 500; 600) of claim 1, 2 or 3, wherein the high CTE material (406; 506; 606) is disposed behind the first surface (408; 508; 608) of the first liner portion (402; 502; 602).

5. The gap closing wearliner (400; 500; 600) of claim 3 or 4, wherein the first surface (408; 508; 608) is driven across the gap (412) in response to a change in temperature.

6. The gap closing wearliner (400; 500; 600) of claim 5, wherein the first surface (408; 508; 608) contacts the tongue (308, 310) in response to the change in temperature.

7. The gap closing wearliner (400; 500; 600) of claim 6, wherein an interference between the first surface (408; 508; 608) and the tongue (308, 310) limits a change in an angle of attack of the vane at a maximum.

8. The gap closing wearliner (500) of any of claims 4 to 7, wherein the high CTE material (506) is disposed behind the second surface of the first liner portion (502).

9. The gap closing wearliner (500) of any of claims 4 to 8, wherein the first liner portion (502) further comprises a third surface (512) extending over a portion of an upper face (328) of the tongue (308, 310), wherein the high CTE material (506) is disposed behind the third surface.

10. The gap closing wearliner (400; 500; 600) of any preceding claim, wherein the first liner portion (402; 502; 602) comprises at least one of a metal, a metal alloy, titanium, titanium alloy, nickel, nickel alloy, plastic, ceramic, or composite.

11. The gap closing wearliner (400; 500; 600) of any preceding claim, wherein a portion of the first liner portion (402; 502; 602) has a disrupted surface.

12. The gap closing wearliner (400; 500; 600) of any preceding claim, wherein the high CTE material (406; 506; 606) comprises at least one of rubber, a synthetic rubber, silicone rubber, a Room-Temperature-Vulcanization silicone compound, plastic, or polytetrafluoroethylene, and/or
wherein, optionally, the high CTE material (406; 506; 606) has a CTE between 10^{- 5}(1/F°) and 1O⁻³(1/F°).

13. A gas turbine engine (2) comprising:
a compressor section configured to compress a gas;
a combustor section aft of the compressor section and configured to combust the gas;
a turbine section aft of the combustor section configured to extract energy from the gas;
and a first gap closing wearliner (224), wherein the first gap closing wearliner (224) comprises a gap closing wearliner (400; 500; 600) as claimed in any preceding claim.

14. The gas turbine engine of claim 13, further comprising a second gap closing wearliner (226).

15. A method of manufacturing a gap closing wearliner (400; 500; 600), the method comprising:
forming a first liner portion (402; 502; 602) and a second liner portion (404; 504; 604) to a first contour of a tongue (308, 310) of a vane pedestal (304) and a second contour of a groove (316, 318) of a compressor vane case (200; 300);
coupling a high CTE material (406; 506; 606) between the first liner portion (402; 502; 602) and the second liner portion (404; 504; 604); and
inserting the first liner portion (402; 502; 602) and the second liner portion (404; 504; 604) into the groove (316, 318) of the compressor vane case (200; 300).
